# EUROPÄISCHE PATENTANMELDUNG

(11) **EP 1 921 556 A1**
(43) Veröffentlichungstag der Anmeldung: **14.05.2008**
(21) Anmeldenummer: 07021913.4
(22) Anmeldetag: 12.11.2007
(51) Int. Cl.: G06F 21/00, H04L 9/32

(54) **Signaturerweiterung**

(30) Priorität: 11.11.2006 DE 102006053450
(71) Anmelder: Authentidate International AG, 40472 Düsseldorf (DE)
(72) Erfinder: Wendenburg, Jan C., 40237 Düselldorf (DE)
(74) Vertreter: Stute, Ivo Peter

(57) **Zusammenfassung**

Die Erfindung betrifft ein Verfahren zum Erzeugen von elektronischen Signaturen (S) für digitale Datensätze (D) von unterschiedlichen Klienten (C) durch einen Signaturserverdienst (SigS), der über ein Netzwerk (SSL) mit verschiedenen Klienten in Verbindung stehen kann, wobei sich jeder Klient (C) über eine für ihn eindeutige Identifizierung am Signaturserverdienst (SigS) anmelden kann, bei dem eine elektronische Signatur (S) für mindestens einen Datensatz (D) eines Klienten erzeugt und in die elektronische Signatur (S) eine erste Information zur Person des Signierenden eingebracht wird. Um bei einem solchen Verfahren einen Nachweis zu ermöglichen, für wen die Signatur (S) ausgestellt worden ist, wird vorgeschlagen, neben einer Information zur Person eines im Namen des Serverdienstes Signierenden (S) eine zweite Information zur Person des Klienten (C) in die elektronische Signatur (S) einzubringen, für den die elektronische Signatur von der Person des im Namen des Serverdienstes Signierenden geleistet wird.

## Beschreibung

Die Erfindung betrifft ein Verfahren zum Erzeugen von elektronischen Signaturen für digitale Datensätze von unterschiedlichen Klienten durch einen Signaturserverdienst, der über ein Netzwerk mit verschiedenen Klienten in Verbindung stehen kann, wobei sich jeder Klient über eine für ihn eindeutige Identifizierung am Signaturserverdienst anmelden kann, und wobei bei dem Verfahren eine elektronische Signatur für mindestens einen Datensatz eines Klienten erzeugt und in die elektronische Signatur eine erste Information zur Person des Signierenden eingebracht wird.

Beim Austausch digitaler Daten über ein Netzwerk werden Verfahren, mit denen die Integrität der digitalen Daten und die Authentizität des für die digitalen Verantwortlichen nachgewiesen werden kann, immer wichtiger. So ist es über ein Netzwerk, beispielsweise über das Internet, digital angebahnte Transaktionen oder Verträge unabdingbar, die Integrität des Inhalts und die Authentizität des bzw. der an der Transaktion Beteiligten oder der Vertragspartner feststellen zu können. Um die Identität und die Authentizität von digitalen Daten, insbesondere von digitalen Dokumenten, sicherstellen zu können, sind Verfahren zum elektronischen Signieren von solchen Daten entwickelt worden. Dabei gehört es zum heutigen Standard, dass zu digitalen Daten mit einem irreversiblen Algorithmus ein Hashwert, also eine Art Fingerabdruck der Daten, erzeugt wird und dieser Hashwert mit einem kryptischen Verfahren unter Verwendung eines privaten Schlüssels eines kryptografischen Schlüsselpaars verschlüsselt und damit eine elektronische Signatur erzeugt wird, die üblicherweise an die digitalen Daten angehängt wird.

Um die Identität und die Authentizität der digitalen Daten überprüfen zu können, wird der mit dem privaten Schlüssel korrespondierende öffentliche Schlüssel benötigt, mit dem die Signatur entschlüsselt werden kann, um den der Signatur zugrunde liegenden Hashwert zu erhalten. Wenn man für die digitalen Daten dann mit dem bereits zuvor verwendeten mathematischen Algorithmus erneut einen Hashwert erzeugt, den Hashwert mit dem bei der Entschlüsselung der Signatur gewonnenen Hashwert vergleicht und beide Hashwerte identisch sind, ist ein Nachweis geführt, dass das der Signatur beigefügte digitale Dokument bereits zur Erzeugung der Signatur vorgelegen hat, dass das digitale Dokument also unverändert ist. Damit ist die Identität des Dokuments sichergestellt.

Gängige Algorithmen zur Erzeugung eines Hashwerts sind unter den Bezeichnungen MD5, SHA, Tiger, HAVAL oder Whirlpool bekannt.

Um die Authentizität des Signierenden sicherstellen zu können, bedarf es hoher Anforderungen an die Signatur. Eine wesentliche Voraussetzung ist, dass der private Schlüssel des Signierenden nur dem Signierenden bekannt ist, so dass ein Missbrauch des privaten Schlüssels von einer anderen Person ausgeschlossen ist. Dies lässt sich von Dritten nicht ohne Weiteres überprüfen, in vielen Fällen ist dem Empfänger die Person des Signierenden als solches persönlich nicht einmal bekannt. Eine verbesserte Überprüfbarkeit der Authentizität bieten beispielsweise qualifizierte elektronische Signaturen oder qualifizierte elektronische Signaturen mit Anbieterakkreditierung, deren Eigenschaften beispielsweise im deutschen Signaturgesetz definiert sind. Eine qualifizierte elektronische Signatur basiert auf einem Zertifikat, eine qualifizierte elektronischen Signatur mit Anbieterakkreditierung auf einem Zertifikat eines akkreditierten Zertifizierungsdienstes. In einer qualifizierten Signatur, ggf. mit Anbieterakkreditierung, ist eine Information zur Person des Signierenden sowie eine oder mehrere Information zum Zertifikat, auf dem diese Signatur basiert, enthalten. Die Hierarchie zur Vergabe von Zertifikaten zur Erzeugung einer elektronischen Signatur mit Anbieterakkreditierung geht in Deutschland bis auf die Bundesnetzagentur zurück.

Das Erzeugen von digitalen Signaturen bedarf eines erheblichen technischen Aufwands hinsichtlich der Erzeugung der Signaturen sowie der Archivierung von signierten Daten, insbesondere dann, wenn eine Vielzahl von digitalen Daten bzw. Dokumenten elektronisch signiert werden sollen. Es gibt Dienstleister, die die Aufgabe des Signierens für Dritte übernehmen. Hierzu stellen sie einen Signaturserverdienst in aller Regel über ein Portal im Internet zur Verfügung, an denen sich Klienten anmelden können und über das sie die digitalen Daten vom Dienstleister signieren lassen können. Verwendet der Dienstleister zum elektronischen Signieren von digitalen Daten und Dokumenten ein Zertifikat von einem akkreditierten Zertifizierungsdienst, erhält der Klient für seine digitalen Daten eine qualifizierte Signatur mit Anbieterakkreditierung, die als besonders vertrauenswürdig eingestuft wird und die zumindest in Deutschland den gesetzlichen Anforderungen an eine elektronische Signatur als Ersatz für eine handschriftlich geleistete Unterschrift entspricht.

Da der Aussteller des digitale Dokuments das eigene Dokument aber nicht mehr selbst signiert, sondern von einem Dritten signieren lässt, besteht das Problem der Zuordnung der elektronischen Signatur zum Aussteller des digitalen Dokuments. Dies lässt sich beispielhaft am Steuerrecht veranschaulichen. Ausgangspunkt einer Umsatzsteuerprüfung durch das Finanzamt ist eine elektronische Rechnung und die dazugehörige elektronische Signatur. Die elektronische Signatur soll neben der Unversehrtheit des Inhalts des digitalen Dokuments die Echtheit der Herkunft der Rechnung gewährleisten. Eine elektronische Signatur eines Dienstleisters, die für alle Klienten des Dienstleisters hinsichtlich ihres Informationsgehalts quasi-identisch ist und in der Regel nur über ein Pseudonym für die Person des Signierenden enthält, kann für sich alleine betrachtet nicht die Echtheit der Herkunft der Rechnung, also den Nachweis der Herkunft und damit die Bindung an den Rechnungssteller gemäß dem geltenden deutschen Steuerrecht, zur Zeit §14 Umsatzsteuergesetz, gewährleisten. Ohne weitere Maßnahmen bindet sie die Rechnung nur an den Dienstleister und nicht an den eigentlichen Rechnungsaussteller im Sinne des Umsatzsteuergesetzes. Durch diese Situation wird bei z.B. Umsatzsteuerprüfungen durch das Finanzamt, oder bei Prüfungen durch Wirtschaftsprüfer der Aufwand zur Ermittlung des eigentlichen Rechnungsstellers über die Signatur sehr erschwert. Im Falle einer Prüfung ist zuerst das Pseudonym durch eine Anfrage beim akkreditierten Zertifizierungsdienst (dem Aussteller des Zertifikates welches zur Signaturerzeugung verwendet wurde) aufzulösen. Nur mit dem echten Namen laut Zertifikat kann der Dienstleister zweifelsfrei ermittelt werden, welcher durch eine weitere Anfrage den Nachweis der Ausstellung der Signatur an den Rechnungssteller führen soll/muss. Der technische Aufwand hierfür ist erheblich.

Zusätzlich besteht das Risiko, dass die notwendige Information zur Verknüpfung einer bestimmten Signatur mit einem Aussteller des digitalen Dokuments bei dem Dienstleister nicht mehr verfügbar ist, weil beispielsweise die Zuordnung der einzelnen elektronischen Signaturen zum Aussteller der digitalen Daten / des digitalen Dokuments (Klient) beim Dienstleister nicht geführt wird oder verloren geht oder der Dienstleister seine Geschäftstätigkeit einstellt. Da die Notwendigkeit zur Überprüfung der Signatur häufig erst zu einem späten Zeitpunkt entsteht, bei einer Umsatzsteuerprüfungen meist erst Jahre nach der Ausstellung einer Rechnung, ist dieses Risiko vergleichsweise hoch.

Der vorliegenden Erfindung liegt die Aufgabe zugrunde, für einen Signaturserverdienst ein Verfahren der eingangs genannten Art zu Verfügung zu stellen, bei dem ein eindeutiger Bezug zwischen Person des Ausstellers eines digitalen Dokuments und Dokument auf einfache Weise und sicher möglich hergestellt werden kann.

Diese Aufgabe wird mit einem Verfahren mit den Merkmalen des Anspruchs 1 gelöst.

Ein Kerngedanke der vorliegenden Erfindung besteht darin, dass in der elektronischen Signatur Informationen zu zwei voneinander verschiedenen Personen enthalten sind, nämlich eine erste Information zu einer ersten Person, in deren Namen ein Dokument für den Signaturserverdienst elektronisch signiert wird, und eine zweite Information zur Person des Klienten, für den die elektronische Signatur erzeugt worden ist. Somit wird aus der elektronischen Signatur selbst nicht nur die Stellvertreterfunktion, die der Signaturserverdienst für den Klienten ausübt, erkennbar, sondern auch der Klient, für den durch den Signaturserverdienst stellvertretend gehandelt wurde.

Diese überraschend einfache Lösung erweitert die Funktion der Signatur um ein Vielfaches. Sie gibt einem Empfänger die Sicherheit, dass die als vertrauenswürdig eingestufte Person des Signierenden mit ihrem Namen für die Authentizität der Herkunft der signierten Daten steht. Darüber hinaus erhält der Empfänger der Signatur die Sicherheit, dass die Person, für die signiert wurde, ebenso als vertrauenswürdig einzustufen ist. So muss der Dienstleister selbst sicherstellen, dass die von ihm zu signierenden Daten aus einer gesicherten Quelle und damit vom Klienten, für den signiert wird, stammen, will der Dienstleister nicht seinen Ruf als vertrauenswürdiger Signaturdiensteanbieter verlieren. Im Ergebnis ist die in der Signatur enthaltene Information über den Klienten, für den signiert worden ist, im Wesentlichen als ebenso vertrauenswürdig einzustufen wie der Signierende selbst.

Um das erfindungsgemäße Verfahren technisch möglichst einfach zu gestalten, wird die zweite Information aus der Identifizierung des Klienten gegenüber dem Signaturserverdienst abgeleitet. Dies bietet sich insbesondere dann an, wenn dem Serverdienst die digitalen Daten über eine gesicherte Netzwerkverbindung zur Verfügung gestellt werden und sich der Klient auf Basis eines eigenen Zertifikats oder anderweitig sicher beim Signaturserverdienst angemeldet hat.

Die zweite Information kann im Klartext in die elektronische Signatur eingebracht werden, insbesondere vorzugsweise dann, wenn es dem Empfänger der elektronisch signierten digitalen Daten ohne Weiteres möglich sein soll, die Person des Klienten, für den die digitalen Daten signiert worden sind, aus der Signatur herauszulesen. Dies ist insbesondere dann möglich, wenn der Name des Klienten vollständig in die Signatur geschrieben wird. Alternativ kann die Information zur Person des Klienten auch als Alias in der Signatur enthalten sein, so dass zumindest für Dritte nicht ohne Weiteres erkennbar ist, für wen die Daten signiert wurden.

Um eine Manipulation der Information zur Person des Klienten in der Signatur zu unterbinden, ist es sinnvoll, die Information verschlüsselt als sogenanntes "signed attribute" in die Signatur einzufügen. Das Einbetten dieser Information in die Signatur als signed attribute hat den zusätzlichen Vorteil, dass sie in einem Signaturprüfbericht, also einem Bericht, der bei der Überprüfung der Gültigkeit der Signatur, bei der beispielsweise die Gültigkeit eines Zertifikats, auf der die Signatur basiert, überprüft wird, ausgegeben wird.

Wie bereits oben erwähnt ist es von erheblichem Vorteil, jedoch nicht zwingend erforderlich, wenn der Klient sich in eindeutiger Weise gegenüber dem Signaturserverdienst identifiziert. Dies kann insbesondere auf der Basis eines dem Klienten zugeordneten Zertifikats erfolgen. Diese Form der Identifizierung des Klienten ist dann besonders sicher, wenn das dem Klienten zugeordnete Zertifikat vom Signaturserverdienst selbst ausgegeben worden ist.

Im Folgenden wird die Erfindung von einer ein bevorzugtes Verfahren in einem Diagramm darstellenden Figur näher erläutert.

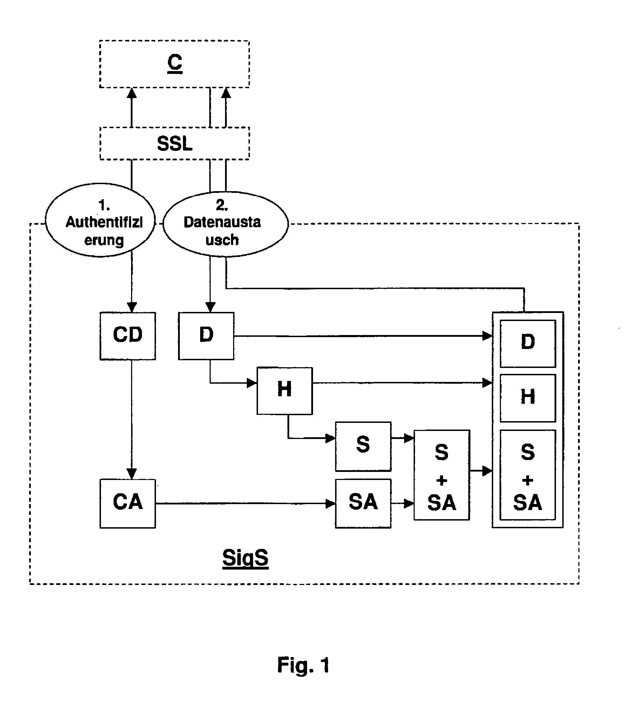

In dem in Figur 1 dargestellten Diagramm ist ein Klient **C** über eine sichere Internetverbindung **SSL** mit einem Signaturserver **SigS** verbunden. Der Signaturserverdienst **SigS** kann durch einen Server (Computer) oder ein Serversystem von mehreren miteinander verbundenen Computern realisiert werden. Voraussetzung für die sichere Datenverbindung ist, dass sich der Klient **C** mit einem Computer in einem ersten Verfahrensschritt gegenüber dem Signaturserver **SigS** ausreichend identifiziert hat, so dass dem Signaturserver **SigS** bekannt ist, mit wem er Daten austauscht. Die Identifizierung kann beispielsweise über ein Zertifikat, das gegebenenfalls vom Signaturserverdienst selbst ausgestellt worden ist, oder durch eine einfache Anmeldung des Klienten **C** am Signaturserver **SigS** mit Benutzername und Passwort erfolgen.

Ist die sichere Internetverbindung **SSL** hergestellt, kann der Klient **C** dem Signaturserverdienst **SigS** einen oder mehrere Dateien **D**, beispielsweise ein digitales Dokument, zusenden. Der Signaturserverdienst **SigS** erzeugt zu der Datei **D** einen Hashwert **H** unter Verwendung eines hierfür geeigneten Hashalgorithmus. Vom Signaturserverdienst **SIgS** wird dann zum Hashwert **H** eine Signatur **S** erzeugt, indem der Hashwert **H** verschlüsselt und dem verschlüsselten Hashwert mindestens eine Information zu der auf Seiten des Signaturserverdienstes für Signaturen verantwortlichen Person hinzugefügt wird. Außerdem korreliert der Signaturserverdienst **SigS** die Daten **CD** zur Identität des Klienten mit einem Alias **CA**, der in einer Klientendatenbank des Signaturserverdienstes **SigS** enthalten ist, signiert das Alias **CA** ebenfalls und hängt es als signed attribute **SA** an die Signatur **S** an. Abschließend wird vom Signaturserverdienst **SigS** ein Datenpaket erzeugt, das die zu signierende Datei **D**, den zu dieser Datei **D** erzeugten Hashwert **H** sowie die um das signed attribute **SA** ergänzte Signatur **S + SA** enthält. Dieses Datenpaket wird dann dem Klienten **C** über das Internet **SSL** übermittelt.

## Patentansprüche

1. Verfahren zum Erzeugen von elektronischen Signaturen (S) für digitale Datensätze (D) von unterschiedlichen Klienten (C) durch einen Signaturserverdienst, der über ein Netzwerk (SSL) mit verschiedenen Klienten in Verbindung stehen kann, wobei sich jeder Klient (C) über eine für ihn eindeutige Identifizierung am Signaturserverdienst anmelden kann, bei dem
- eine elektronische Signatur (S) für mindestens einen Datensatz (D) eines Klienten (C) erzeugt wird, die eine erste Information zur Person des im Namen des Serverdienstes Signierenden enthält, und
- in die elektronische Signatur (S) eine zweite Information zur Person des Klienten (C) eingebracht wird, für den die elektronische Signatur (S) von der Person des im Namen des Serverdienstes Signierenden geleistet wird.

2. Verfahren nach Anspruch 1, **dadurch gekennzeichnet, dass** die zweite Information aus der Identifizierung des Klienten (C) gegenüber dem Signaturserverdienst (SigS) abgeleitet wird.

3. Verfahren nach Anspruch 1 oder 2, **dadurch gekennzeichnet, dass** die zweite Information im Klartext in die elektronische Signatur (S) eingebracht wird.

4. Verfahren nach einem der Ansprüche 1 bis 3, **dadurch gekennzeichnet, dass** die zweite Information in Form eines Alias (CA) für die Person des Klienten (C) eingebracht wird.

5. Verfahren nach einem der Ansprüche 1 bis 4, **dadurch gekennzeichnet, dass** die zweite Information verschlüsselt in die elektronische Signatur (S) eingebracht wird (signed attribute).

6. Verfahren nach einem der Ansprüche 1 bis 5, **dadurch gekennzeichnet, dass** die Identifizierung des Klienten (S) über ein ihm zugeordnetes Zertifikat erfolgt.

7. Verfahren nach Anspruch 6, **dadurch gekennzeichnet, dass** das Zertifikat von dem Signaturdienst ausgegeben wird.
